(19) Europäisches Patentamt
European Patent Office
Office européen des brevets

(11) **EP 3 778 172 A1**

(12) **EUROPEAN PATENT APPLICATION**
published in accordance with Art. 153(4) EPC

(43) Date of publication:
**17.02.2021 Bulletin 2021/07**

(21) Application number: **19774352.9**

(22) Date of filing: **11.03.2019**

(51) Int Cl.:
*B29C 43/58* (2006.01)     *B29C 43/52* (2006.01)
*B29C 70/16* (2006.01)     *B29C 70/42* (2006.01)
*B29K 101/10* (2006.01)     *B29K 105/08* (2006.01)

(86) International application number:
**PCT/JP2019/009714**

(87) International publication number:
**WO 2019/188195 (03.10.2019 Gazette 2019/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **29.03.2018 JP 2018064223**

(71) Applicant: **Toray Industries, Inc.**
**Tokyo, 103-8666 (JP)**

(72) Inventors:
• **TSUMURA, Yusuke**
  **Nagoya-shi, Aichi 455-8502 (JP)**
• **SAOTOME, Tsuyoshi**
  **Nagoya-shi, Aichi 455-8502 (JP)**
• **HOSOKAWA, Naofumi**
  **Tokyo 103-8666 (JP)**

(74) Representative: **Hoefer & Partner Patentanwälte mbB**
**Pilgersheimer Straße 20**
**81543 München (DE)**

(54) **METHOD FOR PRODUCING FIBER-REINFORCED RESIN**

(57)     In order to provide a fiber-reinforced resin that is excellent in mechanical properties and filling properties into cavities, and is also effective for reducing the flash while avoiding problems such as non-filling and non-impregnation with the resin even when a three-dimensional shape having a thickness variation such as a thick part or a projection is to be obtained by press molding, the following method is provided. That is, there is provided a method for producing a fiber-reinforced resin by press-molding a prepreg preform containing a reinforcing fiber and a thermosetting resin, the method including:
(a) a preform production step of producing a preform;
(b) a placement and preheating step of placing the preform in a mold and preheating the preform;
(c) a pressing step of changing the preform into a product shape; and
(d) a curing step of curing the preform while pressurizing the preform,
at start of the pressing step (c), a degree of cure $\alpha e$ of the thermosetting resin in a specific part of the preform being higher than a degree of cure $\alpha i$ of the thermosetting resin in a region other than the specific part of the preform.

Fig.1

(a)

EP 3 778 172 A1

Fig.1

(b)

Fig.1

(c)

Fig.1

(d)

**Description**

TECHNICAL FIELD

The present invention relates to a method for press-molding a prepreg containing a reinforcing fiber and a thermosetting resin. More specifically, the present invention relates to a method for producing a fiber-reinforced resin, the method being less likely to cause disorganization of fibers or flash that is a surplus part of a product even when a prepreg is press-molded, and being capable of providing a molded product excellent in mechanical properties and surface appearance.

BACKGROUND ART

Fiber-reinforced resins are light, strong, and rigid, and are therefore used in a wide range of fields such as sports and leisure applications including fishing rods and golf shafts as well as industrial applications such as automobiles and aircraft. A method suitably employed for the production of fiber-reinforced resins is a method in which a prepreg is used. The prepreg is an intermediate material obtained by impregnating a resin into a fiber reinforcement material made of long fibers such as reinforcing fibers. Prepregs can be cut into a desired shape, and then stacked, shaped, and thermally cured in a mold to provide a molded product made from a fiber-reinforced resin (for example, Patent Document 1).

Further, a method for molding a preform containing a fiber-reinforced resin is disclosed, in which a laminate obtained by stacking prepregs impregnated with a thermoplastic resin or a thermosetting resin is preheated as well as a mold, and a portion near the peripheral part of the laminate is sandwiched with a work holder smaller in size than the laminate to lower the viscosity of the resin, and then the laminate is heated or cooled in the mold while being drawn from the work holder to the mold side to be solidified or semi-cured (for example, Patent Document 2).

In addition, it is desirable to form a shape having variations in thickness or unevenness from a material having good filling properties by molding, and materials such as incised prepregs, which are improved in shape conformability by the formation of minute incisions in the prepregs, are used in press molding (for example, Patent Document 3).

When a thermosetting resin is preheated, the viscosity of the resin first get lowered following the temperature rise of the resin, and is subsequently increased due to the curing reaction of the resin. In general, a method based on the above-mentioned phenomenon is often employed, in which a preform is preheated to increase the degree of cure of the resin and then press-molded.

PRIOR ART DOCUMENTS

PATENT DOCUMENTS

Patent Document 1: Japanese Patent Laid-open Publication No. 2015-143343
Patent Document 2: Japanese Patent Laid-open Publication No. 2008-68532
Patent Document 3: International Publication No. 2017/073460

SUMMARY OF THE INVENTION

PROBLEMS TO BE SOLVED BY THE INVENTION

When the preheating time is shortened and the preform is press-molded with the resin having a low degree of cure, the conformability of the preform to the product shape is improved. However, there are problems such as generation of large flash outside the product shape and the consequent reduction of the material yield, disorganization of fibers due to the flow of the material and the consequent deterioration of the mechanical properties, and the lengthy post-processing for removing the flash.

Conversely, when the preheating time is prolonged and the preform is press-molded with the resin having a high degree of cure, flash is reduced. However, there may be cases where the conformability of the preform is deteriorated, and non-filling or non-impregnation with the resin occurs in portions having a thickness variation, corner portions, or uneven portions to deteriorate the mechanical properties.

Further, as for a compression molding method similar to the above-mentioned methods, in a conventional method, prepregs are stacked and shaped so that the resulting preform may have a three-dimensional shape that is substantially the shape of the molded product and then the preform is pressed. The method has a problem that the production of the preform takes a lot of time and cost.

Further, in the conventional method in which a laminate is drawn to a mold from a work holder smaller in size than the laminate and shaped into an uneven shape with a portion of the laminate near the peripheral part thereof being sandwiched with the work holder, due to the drawing, the portion that is actually sandwiched may be displaced from the portion that is originally sandwiched. Therefore, the method has problems that wrinkles or disorganization of fibers may be generated at the peripheral part of the laminate to deteriorate the mechanical properties, and that a portion outside the sandwiched portion turns into flash to prolong the post-processing. Further, when the method is applied to the production of a molded product, since the outer circumference of the work holder is open, the material may flow out to the outer circumference of the work holder due to the pressure during press molding, resulting in a problem that a molded product excellent in mechanical properties and surface appearance is not obtained.

Therefore, in the conventional techniques, it is extremely difficult to provide a molded product with little disorganization of fibers or flash while achieving both the production efficiency and mechanical properties even if the molding conditions are adjusted using a material excellent in shape conformability.

Therefore, an object of the present invention focusing on the above-mentioned problems is to provide a method for producing a fiber-reinforced resin that is excellent in mechanical properties and filling properties into cavities, and is also effective for reducing the flash while avoiding problems such as non-filling and non-impregnation with the resin even when a three-dimensional shape having a thickness variation such as a thick part or a projection is to be obtained by press molding, and a molded product produced by the method.

SOLUTIONS TO THE PROBLEMS

The present invention is intended to solve the above-mentioned problems, and has any of the following configurations.

(1) A method for producing a fiber-reinforced resin by press-molding a prepreg preform containing a reinforcing fiber and a thermosetting resin, the method including:

    (a) a preform production step of producing a preform;
    (b) a placement and preheating step of placing the preform in a mold and preheating the preform;
    (c) a pressing step of changing the preform into a product shape; and
    (d) a curing step of curing the preform while pressurizing the preform,

at start of the pressing step (c), a degree of cure $\alpha e$ of the thermosetting resin in a specific part of the preform being higher than a degree of cure $\alpha i$ of the thermosetting resin in a region other than the specific part of the preform.

(2) A method for producing a fiber-reinforced resin by press-molding a prepreg preform containing a reinforcing fiber and a thermosetting resin, the method including:

    (a) a preform production step of producing a preform;
    (b) a placement and preheating step of placing the preform in a mold and preheating the preform;
    (c) a pressing step of changing the preform into a product shape; and
    (d) a curing step of curing the preform while pressurizing the preform,

immediately before the pressing step (c), a degree of cure $\alpha e$ of the thermosetting resin in a specific part of the preform is set higher than a degree of cure $\alpha i$ of the thermosetting resin in a region other than the specific part of the preform.

(3) The method according to item (1) or (2), wherein in the preform production step (a), the specific part of the preform includes a prepreg having a higher degree of cure of the thermosetting resin than the region other than the specific part of the preform does.

(4) The method according to any one of items (1) to (3), wherein in the placement and preheating step (b), the specific part of the preform is preheated at a temperature higher than for the region other than the specific part of the preform.

(5) The method according to any one of items (1) to (4), wherein the mold has a protrusion at a position corresponding to the specific part of the preform, and the specific part of the preform is brought into contact with the protrusion in the placement and preheating step (b).

(6) The method according to item (5), wherein the protrusion has a standing wall shape.

(7) The method according to any one of items (1) to (6), wherein the specific part is a peripheral part of the preform.

(8) The method according to any one of items (1) to (7), wherein the preform being used has an area in a planar state equal to or more than a projected area of a cavity of the mold.

EFFECTS OF THE INVENTION

According to the method for producing a fiber-reinforced resin of the present invention, the resin has a higher degree of cure in the specific part of the preform, and the flow of the material is suppressed in the specific part. Therefore, even when a fiber-reinforced resin having a three-dimensional shape, in particular, a shape having a thickness variation such as a thick part or a projection is to be obtained, the preform is easily changed in shape by the pressure of the press molding, and the disorganization of fibers and the flash can be reduced.

BRIEF DESCRIPTION OF THE DRAWINGS

Figs. 1(a) to 1(d) are diagrams showing an example of a production process of the present invention.
Figs. 2(a) to 2(d) are diagrams showing examples of a specific part of a preform in the present invention.
Fig. 3 is a diagram showing an example of a fiber-reinforced resin obtained by the present invention, and is a diagram of a fiber-reinforced resin having variations in thickness and unevenness.
Fig. 4(a) is a diagram showing a shape of a mold used in examples, and Fig. 4(b) is a diagram showing a shape of a cavity of the mold.
Figs. 5(a) to 5(d) are diagrams showing examples of the preform in the present invention.

EMBODIMENTS OF THE INVENTION

The present invention relates to a production method that is less likely to cause disorganization of fibers or flash even when a prepreg containing a reinforcing fiber and a thermosetting resin is press-molded, and is capable of providing a molded product excellent in mechanical properties and surface appearance, as well as to a molded product. The details of embodiments of the present invention will be described below.

[Production process]

A specific production method of the present invention includes:

(a) a preform production step of producing a preform;
(b) a placement and preheating step of placing the preform in a mold and preheating the preform;
(c) a pressing step of changing the preform into a product shape; and
(d) a curing step of curing the preform while pressurizing the preform, and

immediately before the pressing step (c), a degree of cure $\alpha e$ of the thermosetting resin in a specific part of the preform is set higher than a degree of cure $\alpha i$ of the thermosetting resin in a region other than the specific part of the preform. Herein, establishing the above-mentioned relationship between the degrees of cure $\alpha e$ and $\alpha i$ of the thermosetting resin immediately before the pressing step (c) means that at the start of the pressing step (c), the degree of cure $\alpha e$ of the thermosetting resin in the specific part of the preform is required to be higher than the degree of cure $\alpha i$ of the thermosetting resin in the region other than the specific part of the preform.

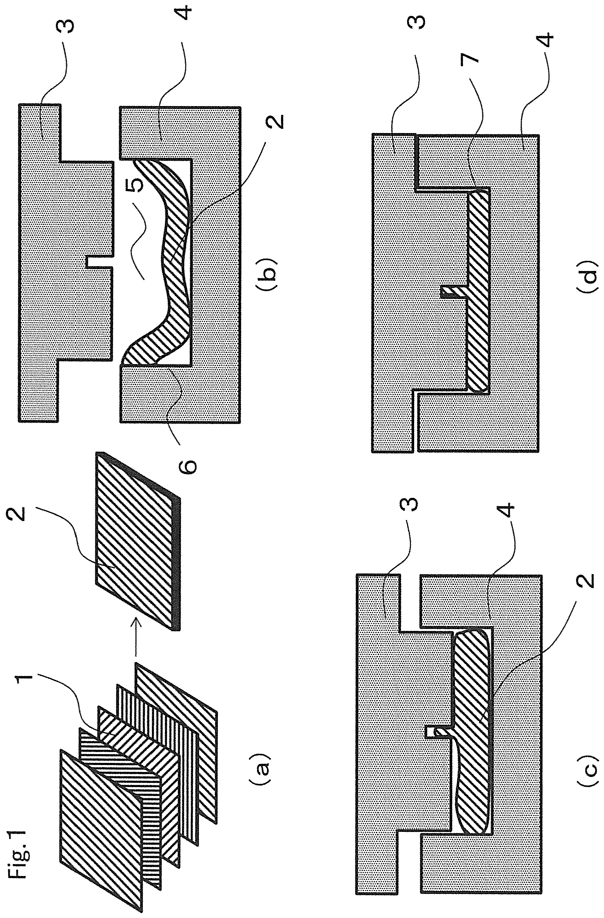

In the following, the description will be made with reference to the drawings. Figs. 1(a) to 1(d) are diagrams showing an example of a production process of the present invention.

First, as shown in, for example, Fig. 1(a), the preform production step is performed. Prepregs 1 are cut into a predetermined shape with a cutter, scissors, or an automatic cutting machine, and the cut pieces are stacked to produce a preform 2. It is preferable that the preform 2 be produced by covering the entire prepregs with a bag film or the like and then bringing the prepregs into close contact with each other by evacuation. Herein, it is to be noted that a plurality of prepregs 1 are stacked to produce the preform 2. In the present invention, however, it is not always necessary to form a laminate, and one prepreg layer may be used as the preform.

After the preform 2 corresponding to a precursor of a molded product is produced, the placement and preheating step is performed as shown in Fig. 1(b). The temperature of molds (a first mold 3 and a second mold 4) is adjusted to a temperature equal to or more than the curing temperature of the thermosetting resin, and then the preform 2 is placed in a cavity 5 of the second mold 4. From the moment when the preform 2 is placed in the second mold 4, preheating of the preform is started, and the thermosetting resin starts the curing reaction. Then, the first mold 3 is closed to a predetermined position, and the preform is preheated for a predetermined time. It is to be noted that the positional relationship between the first mold 3 and the second mold 4 may be reversed, that is, the preform 2 may be placed on the first mold 3.

Following or simultaneously with the placement and preheating step, the pressing step is performed as shown in Fig. 1(c). The preform 2 is pressurized by the first mold 3 and the second mold 4 to be changed into a cavity shape as a product shape. The preform 2 is pressurized with almost no outflow to the outside of the molds, and fills almost the whole cavity 5.

Further subsequently, the curing step is performed as shown in Fig. 1(d). The preform changed into the cavity shape is held while being pressurized so that the thermosetting resin may be cured, whereby a molded product 7 is obtained.

Then, each steps will be described in detail.

[(a) Preform production step]

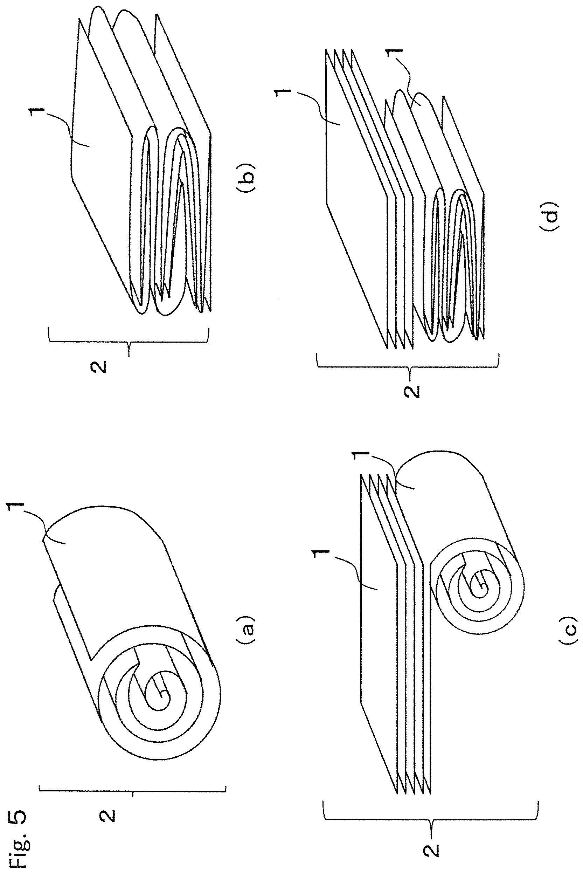

In the preform production step, for example, cut prepregs are stacked to produce a preform. Only one prepreg layer may be used as the preform. Further, the preform may be formed not only by arranging flat prepregs as they are, but also by making a roll of a prepreg, folding a prepreg, or combining these shapes as shown in Figs. 5(a) to 5(d). The prepreg used in the present invention contains a reinforcing fiber and a thermosetting resin.

(Reinforcing fiber)

The reinforcing fiber used in the prepreg may have a form of continuous fibers, for example. A prepreg preform containing continuous fibers as the reinforcing fiber can be mentioned as an example of a structure having high strength, because a molded product produced from a prepreg preform may easily rely on the strength of fibers when the molded product is exposed to a load. Examples of the structure of the prepreg containing continuous fibers include a unidirectional prepreg in which continuous fibers are arranged in one direction, a woven fabric prepreg containing woven continuous fibers, and a braiding of continuous fibers impregnated with a resin.

It is also possible to partially form incisions in a prepreg containing continuous fibers as the reinforcing fiber (more specifically, form a plurality of incisions so as to cross the continuous fibers) and use the prepreg as an incised prepreg. From the viewpoint of mechanical properties, it is preferable to use a unidirectional prepreg having incisions as an incised prepreg. In addition, the incised prepreg can be used in a preform in combination with a normal prepreg that merely contains continuous fibers as the reinforcing fiber and has no incision.

Use of the incised prepreg in the preform can be mentioned as one of preferable aspects of the present invention. With such a prepreg, an incised portion is likely to be opened or deviated, and the stretchability of the prepreg in the reinforcing fiber direction is improved. In addition, the incised portion is opened by the flow during compression molding, and the fiber bundles of the reinforcing fiber are separated from each other, so that the prepreg comes to exhibit flexibility and improved fluidity. With the above-mentioned flowable structure of the prepreg, the reinforcing fiber reaches the end of the molded product. As a result, a region with an excessive resin is reduced, and a molded product excellent in mechanical properties and appearance can be obtained. From the viewpoint of fluidity, it is preferable that the cut plane at the incised portion penetrate the prepreg in the thickness direction thereof (that is, the incision be formed in the entire prepreg in the thickness direction thereof).

The length of the cut reinforcing fiber contained in the incised prepreg (that is, the length of the reinforcing fiber cut by the incision) is preferably 3 mm or more and 100 mm or less, more preferably 5 mm or more and 75 mm or less, still more preferably 10 mm or more and 50 mm or less. When the length of the reinforcing fiber is equal to or more than the lower limit of the above-mentioned preferable range, the molded product exhibits adequate mechanical properties. Meanwhile, when the length of the reinforcing fiber is equal to or less than the upper limit of the above-mentioned preferable range, the preform may have sufficient fluidity during molding.

The cut length (depth of incision) of the incised portion varies depending on the angle formed by the direction of incision and the direction of principal axis of the reinforcing fiber in the prepreg. The cut length of the incised portion, in terms of the projected length in the direction orthogonal to the reinforcing fiber in the prepreg, is preferably 0.05 mm or more and 25 mm or less, more preferably 0.1 mm or more and 10 mm or less, still more preferably 0.15 mm or more and 5 mm or less. When the cut length is equal to or more than the lower limit of the above-mentioned preferable range, the incised portion is opened to a large degree, and the preform exhibits sufficient fluidity. Meanwhile, when the cut length is equal to or less than the upper limit of the above-mentioned preferable range, opening of the incised portion is suppressed, and a molded product excellent in appearance quality and mechanical properties can be obtained.

The fiber volume fraction preferable for the prepreg is preferably 40% or more and less than 80%, more preferably 45% or more and less than 75%, still more preferably 50% or more and less than 70%. As described above, the unidirectional prepreg and the incised prepreg are excellent in the efficiency of filling with the reinforcing fiber, and are therefore suitable for extracting the reinforcing effect of the reinforcing fiber and are effective in improving the rigidity of the molded product.

The amount of the reinforcing fiber contained in the prepreg is preferably 50 gsm or more and less than 1000 gsm in terms of the basis weight (g/m$^2$) of the reinforcing fiber in a sheet-like material. In a prepreg made of a precursor such as a small piece of a reinforcing fiber bundle impregnated with a thermosetting resin, or a chopped fiber bundle, if the basis weight is too small, voids with no reinforcing fiber may be formed in the plane of the prepreg. When the basis weight is equal to or more than the lower limit of the above-mentioned preferable range, it becomes possible to eliminate voids that are weak portions in the fiber-reinforced resin. Meanwhile, when the basis weight is less than the upper limit of the above-mentioned preferable range, it becomes possible to uniformly transfer the heat to the inside in the preheating for the molding. The basis weight is more preferably 100 gsm or more and less than 600 gsm, still more preferably 150 gsm or more and less than 400 gsm in order to achieve both uniformity of the structure and heat transfer uniformity. The basis weight of the reinforcing fiber is measured by cutting out a 10-cm square region from a sheet-like material of the reinforcing fiber, measuring the mass of the cut region, and dividing the mass by the area of the region. The measurement is performed ten times at different parts of the sheet-like material of the reinforcing fiber, and the average of the measured values is employed as the basis weight of the reinforcing fiber.

It is also possible to use a prepreg including a part in which the thermosetting resin is not impregnated into the reinforcing fiber. Herein, the non-impregnated part is a part in which the thermosetting resin is not attached to the surface of the reinforcing fiber. The non-resin-impregnated part of the prepreg may come to be impregnated with the thermosetting resin flowing from the other part when the prepreg is subjected to compression molding such as press molding, and may exhibit desired properties as a sound part.

Examples of the reinforcing fiber used in the prepreg include carbon fibers, glass fibers, aramid fibers, alumina fibers, silicon carbide fibers, boron fibers, metal fibers, natural fibers, and mineral fibers. One of them or a combination of two or more of them may be used. Among them, carbon fibers such as PAN-based, pitch-based, and rayon-based carbon fibers are preferably used from the viewpoint of high specific strength and high specific rigidity as well as the weight reduction effect. Alternatively, reinforcing fibers coated with a metal such as nickel, copper, or ytterbium can also be used from the viewpoint of improving the conductivity of the molded product obtained from the prepreg.

(Thermosetting resin)

Examples of the thermosetting resin used in the prepreg include resins such as unsaturated polyester, vinyl ester, epoxy, phenol, urea-melamine, maleimide, and polyimide resins, copolymers and modified products of the above-mentioned resins, and blends of at least two of the above-mentioned resins. Among them, an epoxy resin is preferably used from the viewpoint of mechanical properties of the molded product obtained from the prepreg. Further, since the prepreg is cured in the pressing step (c) and the curing step (d), the thermosetting resin used preferably has a glass transition temperature of 80°C or less in an uncured state. The glass transition temperature is more preferably 70°C or less, still more preferably 60°C or less.

The degree of cure of the thermosetting resin can be measured, for example, by comparing the calorific values before and after the reaction using a differential scanning calorimeter. Specifically, the degree of cure α (%) can be calculated by the following formula wherein H0 (J) is the calorific value of a prepreg having a degree of cure of the thermosetting resin of 0%, and H1 (J) is the measured calorific value of the prepreg.

$$\alpha = \{(H0 - H1)/H0\} \times 100$$

(Structure of preform)

In the present invention, a prepreg cut into a desired shape may be used alone, a plurality of prepregs may be stacked, or a plurality of laminates of the prepregs may be combined to produce a preform suitable for a product shape, and the preform may be used in the molding. Further, it is possible to use, as the preform, a plurality of divided preforms, that is, a plurality of preforms can be used to form a desired product shape.

A preform, such as a laminate of prepregs, is preferably preliminarily shaped into a three-dimensional shape. Use of such a preform can provide a molded product excellent in mechanical properties, because the preform has a shape close to that of the mold cavity, so that the flow of the preform such as a laminate of prepregs during press molding is suppressed, and the disorganization of the reinforcing fiber contained in the preform can be suppressed. Further, use of such a preform facilitates placing of the preform in the mold cavity, because the preform has a shape close to that of the molded product.

It is preferable to use a preform having a volume close to the product shape. It is preferable to set the volume of the preform to 100% or more and 120% or less of the volume of the molded product obtained from the preform. A volume of the preform of 100% or more enables application of a sufficient molding pressure to the preform. Meanwhile, a volume of the preform of 120% or less can suppress the outflow of the material to the outside of the product shape to improve the material yield.

The thickness of the preform is preferably 80% or more and 200% or less of the thickness of the product shape in any region. It is preferable that the thickness varying in the plane, for example, a region in which the thickness is 80% or more and less than 100 and a region in which the thickness is 100% or more and 200% or less be provided. Partially providing the region in which the thickness is 80% or more and less than 100% allows for the provision of the region in which the thickness is 100% or more and 200% or less while keeping the volume of the preform 100% or more and 120% or less. The region in which the thickness is 100% or more and 200% or less comes into contact with both the first mold and the second mold at the same time ahead of the other region (thinner region) in the placement and preheating step, so that the curing reaction of the resin is accelerated in the above-mentioned region than in the other region. As a result, flow of the material is suppressed, so that the disorganization of fibers is suppressed and the flash can be reduced.

It is also a preferable aspect to set the area of the preform in a planar state equal to or more than the projected area of the mold cavity. The "area in a planar state" means the projected area of the preform that is not placed in a mold but is simply placed on a plane in the thickness direction of the preform. For example, when a preform as shown in any of Figs. 5(a) to 5(d) is used, the area of the preform projected in the vertical direction in the paper as in the shape shown in the drawing is the "area in a planar state". The projection direction for determining the projected area of the mold cavity is the mold opening direction. In the case of the above-mentioned configuration, for example, the entire outer circumference of the preform as the specific part can be brought into contact with the mold before the central part of the preform (region other than the specific part) comes into contact with the mold. This configuration is particularly effective when the mold has a standing wall at the outer circumference of the cavity.

The preform may be formed not only by arranging flat prepregs as they are, but also by making a roll of a prepreg, folding a prepreg, or combining these shapes as shown in Figs. 5(a) to 5(d). For example, it is an example of a preferable aspect to combine a laminate of prepregs with a rough-shaped preform element (prepreg) to form a preform. The "rough-shaped preform element" is, for example, a rolled structure that is obtained by rolling up a prepreg (Fig. 5(a)), a folded structure that is obtained by folding a prepreg (Fig. 5(b)), or a structure that is obtained by drawing out part of either of the above-mentioned structures to linearly change the shape of the structure. Use of a rough-shaped preform element can eliminate the time required for stacking the prepregs.

It is also an example of a preferable aspect that a laminate of prepregs and a rough-shaped preform element be fixed to each other. In such a configuration, appropriate handling properties may be achieved during conveyance of the preform and in the step of placing the preform in the mold cavity, and the relative positional relationship between the prepregs and the rough-shaped preform element may be maintained throughout the steps. Optimization of the charge rate of each part into the mold cavity may result in an effect of improving the yield of the molded product.

Examples of the fixing method include a method of fixing by pressing using the tackiness the prepregs, and a method of fixing by vibration welding, ultrasonic welding, or the like.

In the present invention, at the start of the pressing step, the degree of cure $\alpha e$ of the thermosetting resin in the specific part of the preform is set higher than the degree of cure $\alpha i$ of the thermosetting resin in the region other than the specific part of the preform. Therefore, it is preferable that the specific part of the preform include a prepreg having a higher degree of cure of the thermosetting resin than the region other than the specific part of the preform does. In such a configuration, in the pressing step (c), the degree of cure $\alpha e$ (%) of the thermosetting resin in the specific part of the preform is higher than the degree of cure $\alpha i$ (%) of the thermosetting resin in the region other than the specific part of the preform. Therefore, it is possible to suppress the flow of the material to suppress the disorganization of fibers in the specific part, and to make the preform conform to a complicated shape by the sufficient flow of the material in the region other than the specific part, so that a molded product excellent in mechanical properties and product appearance can be obtained.

The degree of cure $\alpha i$ (%) of the thermosetting resin in the region other than the specific part of the preform is preferably 0.5% or more and 30% or less at the start of the pressing step. If the degree of cure $\alpha i$ is too low, the preform may be easily changed in shape during handling, and the accuracy of placement in the mold may be deteriorated. When the degree of cure $\alpha i$ is equal to or more than the lower limit of the above-mentioned preferable range, the accuracy of placement of the preform is improved. Meanwhile, if the degree of cure $\alpha i$ is too high, the thermosetting resin may be gelated before the preform starts to flow by the molding pressure in the press molding, and sufficient fluidity may not be obtained. When the degree of cure $\alpha i$ is equal to or less than the upper limit of the above-mentioned preferable range, the preform may have sufficient fluidity during molding.

From the viewpoint of improving the design of the molded product obtained from the preform, it is preferable to bond at least one film selected from the group consisting of a decorative film, a transparent film, and a toning film to a surface of the preform. Herein, the decorative film preferably has a design and/or a geometric pattern on the film surface. The transparent film preferably contains a resin having a visible light transmittance of 80 to 100%. Further, the toning film preferably contains an organic and/or inorganic pigment or colorant. In addition, a glossy film, a print film, an antistatic film, a light-shielding film, a heat-resistant film, or the like can be used as necessary.

(Specific part and region other than specific part of preform)

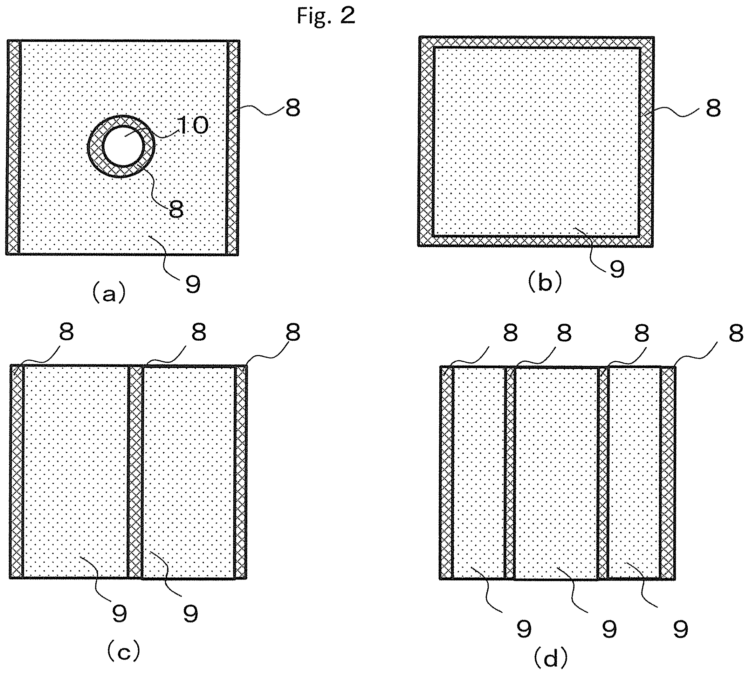

Examples of the above-mentioned specific part of the preform are shown in Figs. 2(a) to 2(d). From the viewpoint of suppressing the disorganization of fibers and improving the mechanical properties of the product, the specific part of the preform is preferably a region in which a large load or strain is generated in use of the product.

In addition, from the viewpoint of suppressing the disorganization of fibers and improving the appearance of the product, the specific part of the preform is preferably a region that is exposed to the outside in use of the product.

Further, from the viewpoint of suppressing the flow of the material to suppress the flash, the specific part of the preform is preferably the peripheral part of the preform. In such a configuration, the peripheral part of the preform is substantially the peripheral part of the product shape. At the start of the pressing step, it is not necessary that the entire peripheral part be defined as the specific part in which the degree of cure of the thermosetting resin is higher than the degree of cure in the other part, and a plurality of discontinuous specific parts can be provided as necessary. When the degree of cure of the thermosetting resin in the peripheral part of the preform is set higher than the degree of cure in the other region at the start of the pressing step, the degree of cure of the thermosetting resin in the peripheral part of the preform is higher than the degree of cure in the other region also during the pressing step. As a result, the flow of the material is suppressed and the flash is reduced. Meanwhile, in the region other than the specific part of the preform, the degree of cure is lower than in the peripheral part, the flow of the material is not suppressed, and the material can conform to a complicated shape. Herein, the peripheral part may be the outer circumference of the shape, or may be a closed perimeter region inside the shape, which is to be subjected to drilling and trimming in post-processing.

The "region other than the specific part" of the preform refers to a portion in which the preform needs to flow or stretch more than in the specific part of the preform in order for the preform to be molded into a desired product shape, and indicates a region other than the specific part of the preform. For example, when the peripheral part of the preform is selected as the specific part of the preform in order to suppress the flash, the internal region surrounded by the peripheral part of the preform serves as the region other than the specific part. When the inside of the preform is selected as the specific part from the viewpoint of improving the appearance and mechanical properties of the main part of the product, the peripheral part of the preform serves as the region other than the specific part of the preform.

[(b) Placement and preheating step]

The placement and preheating step (b) is basically a step from the placement of the preform in a first mold and the start of heating of the preform to the point at which a second mold comes into contact with the preform. The preform is placed in the cavity of the first mold and preheated.

(Mold)

The mold used in the present invention is required to be a mold capable of curing the preform under high temperature and high pressure, and includes at least two molds of the first mold and the second mold (an upper mold and a lower mold or a male mold and a female mold). Each mold may have a split structure or a nested structure. Between the at least two molds of the first mold and the second mold, a cavity containing a product shape is provided. The temperature of the molds is adjusted by an electric heater or a heat medium, and the cavity is heated to the molding temperature.

The two molds used are preferably molds having a structure capable of keeping the inside of the molds airtight when the molds are closed. Herein, "airtight" means a state where even when a preform in an amount sufficient for filling the molds is put into the molds and the preform is pressurized, the epoxy resin forming the preform does not substantially leak out of the molds. Examples of the molds capable of keeping the inside airtight include molds having a shear edge structure or a rubber seal structure in a part at which the first mold and the second mold come into contact with each other when the molds are tightened. Further, the molds may have any structure as long as the inside of the molds is kept airtight.

In the present invention, at the start of the pressing step, the degree of cure $\alpha e$ of the thermosetting resin in the specific part of the preform is set higher than the degree of cure $\alpha i$ of the thermosetting resin in the region other than the specific part of the preform. In order to achieve this configuration, the mold used in the present invention preferably has a protrusion at a position corresponding to the specific part of the preform. With such a configuration, the specific part of the preform comes into contact with the mold ahead of the other region, and is more likely to be heated than the other region during the preheating. Therefore, the specific part has a higher degree of cure than the other region does, the flow of the material is suppressed in the pressing step, and the disorganization of fibers can be reduced.

The protrusion may have a standing wall shape. When the protrusion has a standing wall shape, the protrusion is preferably provided at a position corresponding to the peripheral part of the product shape. As a result, the peripheral part of the preform comes into contact with the protrusion in the placement and preheating step, so that the peripheral part has a high degree of cure, the flow of the material is suppressed in the pressing step, and the flash can be reduced.

From the same viewpoint, it is preferable that the mold used in the present invention have a higher temperature at a position corresponding to the specific part of the preform than at the other part. For example, when the specific part of the mold has a nested structure and the mold is heated with an electric heater or a heat medium so that the nest may have a higher temperature than that of the other part, the specific part of the preform is heated at a higher temperature than that for the other region. As a result, at the start of the pressing step, the degree of cure of the specific part is higher than that of the other region.

The temperature of the mold in the placement and preheating step is preferably 100°C or more and less than 220°C although it depends on the thermosetting resin used. When the preheating temperature of the mold is 100°C or more, the curing reaction of the resin can be sufficiently performed, and the molded product can be obtained with high productivity. Further, when the temperature is less than 220°C, it is possible to suppress the generation of a gas that is to be generated by the excessive reaction due to the accumulation of heat of the resin, and it is possible to prevent the non-filling or generation of voids in the molded product.

(Placement method)

The preform is placed in the cavity of the first mold by hand, a jig, or an automatic machine.

It is desirable that the preform be placed so that the specific part may come into contact with the mold. For example, when the preform being used has an area in a planar state equal to or more than the projected area of the mold cavity, it is preferable to place the preform while bending the preform as necessary so that the specific part may come into contact with the mold and that the other region may not come into contact with the mold. This placement method can provide a degree of cure of the specific part higher than that in the other region, suppress the flow of the material in the pressing step, and reduce the disorganization of fibers.

Further, when a plurality of divided preforms are used, placing a divided preform to be located in the specific part ahead of the other divided preforms can provide a degree of cure of the specific part higher than that in the other region, suppress the flow of the material in the pressing step, and reduce the disorganization of fibers.

(Preheating method)

The preform is started to be preheated from the moment when the preform is placed in the first mold, and the thermosetting resin starts the curing reaction. Then, the second mold is closed to a predetermined position, and the preform is preheated for a predetermined time.

It is preferable that the specific part of the preform be preheated for a longer time or at a higher temperature than the region other than the specific part of the preform does by the above-mentioned method in which the mold is used or the above-mentioned placement method.

The size of the predetermined position is preferably 0 mm or more and 100 mm or less, more preferably 0 mm or more and 10 mm or less. When the size of the predetermined position is 0 mm or more, it is possible to minimize the contact of the mold with the preform, and to suppress the positional deviation of the preform and the disorganization of fibers. When the size of the predetermined position is 100 mm or less, cooling of the preform by the atmosphere outside the mold can be suppressed, and the preform can be sufficiently preheated. The predetermined position is a value that represents the difference from the relative positional relationship between the first mold and the second mold at the completion of the final mold clamping, the positional relationship being represented as 0 mm.

The preheating time in a state where the mold is closed to the predetermined position is preferably 0 seconds or more and 30 minutes or less. Although it depends on the time for which the preform is placed, the time of the preheating step may be set to 0 seconds when a resin that is fast to react is used.

It is preferable that the viscosity of the resin immediately before the pressing step (that is, at the start of the pressing step) be adjusted to 10 Pa·s or more and 1000 Pa·s or less by the preheating. If the viscosity of the resin is too low, only the resin in the prepreg may flow so that the resin may exude from the prepreg. However, when the viscosity is 10 Pa·s or more, the reinforcing fiber can also flow together with the resin, and the molded product may have improved mechanical properties and appearance. Meanwhile, if the viscosity of the resin is too high, it may be difficult for the preform to conform to the product shape, or the resin may not be impregnated into the entire reinforcing fiber and the molded product may have an impaired surface appearance. When the viscosity is 1000 Pa·s or less, the preform conforms to the product shape, and the resin is impregnated into the entire reinforcing fiber.

[(c) Pressing step]

The pressing step is a step of changing the shape of the preform with a mold, and is a step after the completion of the preheating and placement step to the conformance of the preform to the product shape.

If the mold clamping speed in the pressing is too low, the viscosity of the resin may increase before the mold clamping is completed, and the preform may be incapable of conforming to the product shape. If the mold clamping speed is too high, the material may leap out of the mold, and moreover, the mold or the apparatus may be broken down due to the impulsive force applied thereto. From the above-mentioned viewpoint, the mold clamping speed is preferably 0.2 mm/s or more and 50 mm/s or less, more preferably 0.5 mm/s or more and 25 mm/s or less, still more preferably 1.2 mm/s or more and 12 mm/s or less.

The molding pressure is obtained by dividing the press load by the projected area of the cavity in the mold clamping direction. If the molding pressure is too low, the preform may not sufficiently conform to the product shape. If the molding pressure is too high, a large molding device may be required and the productivity may be deteriorated. Therefore, the molding pressure in terms of the gauge pressure is preferably 0.1 MPa or more and 30 MPa.

[(d) Curing step]

The curing step is a step after the conformance of the preform to the product shape to the completion of curing of the thermosetting resin. In the curing step, the preform does not substantially flow, and the thermosetting resin is cured in a state where the disorganization of fibers in the specific part as well as the flash is suppressed to give a molded product.

Following the curing step, the mold is opened and the molded product is demolded. The demolded molded product is subjected to post-processing such as trimming and drilling as necessary so that the molded product may be formed into the final product shape.

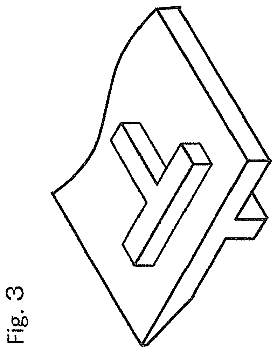

As described above, in the present invention, at the start of the pressing step, the degree of cure $\alpha e$ of the thermosetting resin in the specific part of the preform is set higher than the degree of cure $\alpha i$ of the thermosetting resin in the region other than the specific part of the preform. With such a configuration, even when a three-dimensional shape having a thickness variation such as a thick part or a projection as shown in, for example, Fig. 3 is to be obtained by press molding, the fiber-reinforced resin is excellent in mechanical properties and filling properties into cavities, and is also capable of reducing the flash while avoiding problems such as non-filling and non-impregnation with the resin. In order to obtain such a degree of cure, one of the following conditions or two or more of the following conditions together may be employed: (i) the specific part includes a prepreg having a higher degree of cure of the thermosetting resin than the region other than the specific part does; (ii) the specific part is preheated at a temperature higher than the preheating temperature for the region other than the specific part; (iii) the specific part is preheated for a time longer than the preheating time for the region other than the specific part; and (iv) the specific part is preheated with more heat than the heat for heating the region other than the specific part.

EXAMPLES

Hereinafter, the present invention will be described in more detail by way of examples. The evaluation methods used in the examples are as follows.

(1) Dimensions of preform:

As for a prepreg that constitutes the preform, the thickness, width, and length were measured with a caliper in units of 1 mm.

(2) Degree of cure of preform:

From a laminate of prepregs that constitute the preform, a 20-mg sample was cut out in each of the specific part and the region other than the specific part, and the calorific value H1 (J) of each of the samples was measured using a differential scanning calorimeter. Then, the calorific value H0 (J) of the prepregs having a degree of cure of the thermosetting resin of 0% was measured, and the degree of cure $\alpha$ (%) was calculated by the following formula.

$$\alpha = \{(H0 - H1)/H0\} \times 100$$

(3) Filling properties of molded product:

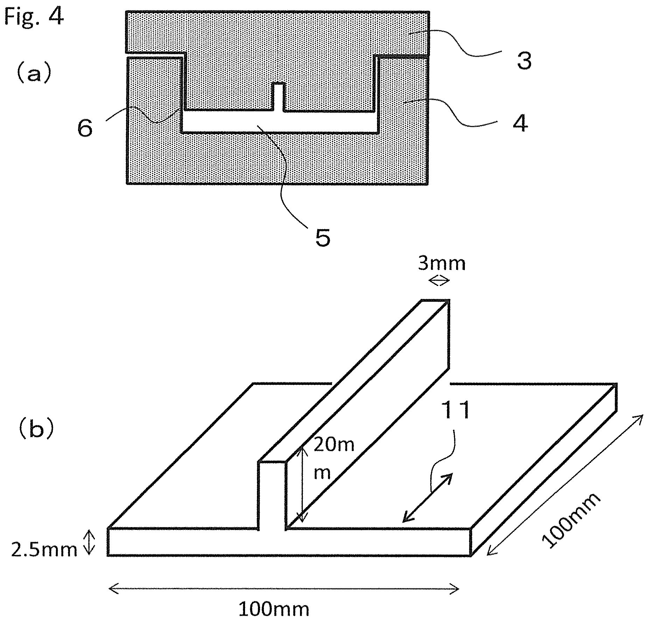

Using the mold having the cavity shown in Figs. 4(a) and 4(b), a preform was press-molded. A cross section at an end of the molded product was polished and observed, and filling of the molded product was evaluated according to the following criteria. Ranks A and B were rated as passed.

A: The molded product has no missing part due to poor filling, and both the fiber reinforcing and the thermosetting resin are present at the end of the molded product.
B: The molded product has no missing part due to poor filling, but only the thermosetting resin is present at the end of the molded product.
C: The molded product has a missing part due to poor filling.

(4) Surface appearance of molded product:

The surface appearance of the molded product was evaluated as A when no visible unevenness or disorganization of fibers was observed in the specific part, and was evaluated as C when unevenness or disorganization of fibers was observed. A case where yellowing due to defective molding or unevenness due to a resin rich area was observed on the surface was also classified as C. Here, rank A was rated as passed.

(5) Flash of molded product:

The flash of the molded product was evaluated according to the following criteria. Rank A was rated as passed.

A: The molded product has no missing part due to poor filling, and the weight W2 (g) of the flash generated outside the cavity shape in the specific part of the preform is less than 1% of the product weight W3 (g).
C: The molded product has a missing part due to poor filling, or the weight W2 (g) of the flash generated outside the cavity shape in the specific part of the preform is 1% or more of the product weight W3 (g).

The weight W2 (g) of the flash generated in the specific part was obtained as the difference between the weight W0 (g) of the molded product after the demolding and the weight W1 (g) of the molded product after the peripheral part as the specific part was subjected to trimming. The product weight W3 (g) was the weight of the molded product after all the parts requiring trimming other than the specific part were subjected to trimming.
The prepregs used in the examples of the present invention are as follows.

[Prepreg]

The prepreg used was a unidirectional prepreg P3432S-20 (manufactured by Toray Industries, Inc.). The prepreg has the following properties. Hereinafter, the prepreg is referred to as a prepreg (A).

- Density of carbon fiber: 1.80 g/cm$^3$
- Tensile strength of carbon fiber: 4.9 GPa
- Tensile modulus of carbon fiber: 230 GPa
- Basis weight of yarn: 200
- Resin content: 33%
- Thickness: 0.19 mm

[Incised prepreg]

Incisions were formed in the prepreg (A) using an automatic cutting machine to produce an incised prepreg. The cut length (depth of incision) of the incised portion was 1 mm (the projected length in the direction orthogonal to the reinforcing fiber was 0.24 mm), the angle formed by the direction of incision and the direction of principal axis of the reinforcing fiber in the prepreg was 14°, and the average length of the reinforcing fibers cut by the incisions was 25 mm. The incisions were made to penetrate the prepreg in the thickness direction thereof. The properties other than those of the incisions are the same as those of the above-mentioned unidirectional prepreg (A). Hereinafter, the prepreg is referred to as a prepreg (B).

[Prepreg having high degree of cure]

The prepreg (B) was heated in an oven at 80°C for a while to produce a prepreg having a high degree of cure. Hereinafter, the prepreg is referred to as a prepreg (C).

(Example 1)

The prepreg (A) was cut into pieces each having dimensions of 102 mm long and 102 mm wide so that the angle formed by the length direction of the prepreg (a length direction 11 of a cavity 5 shown in Figs. 4(a) and 4(b) in which a preform is to be placed) and the direction of principal axis of the reinforcing fiber might be 0°, ±45°, and 90°. The cut pieces were stacked so that the stacked structure might be [45/0/-45/90]$_{2s}$ to produce a laminate (1) of prepregs, that is, a preform. Two laminates were produced. Each number in the notation "[45/0/-45/90]" represents the size (°) of the angle formed by the length direction and the direction of principal axis of the reinforcing fiber, with the longitudinal direction being the direction of 0°. In addition, the notation "2s" represents an aspect in which a laminate of two repetitions of the combination in the parentheses and a laminate of the combination in the reverse order are prepared, and the laminates are stacked symmetrically. As for one of the obtained laminates (1) of prepregs, the dimensions and the degree of cure were measured by the methods described above.

Then, the entire peripheral part that is the outer circumference of the preform was defined as the specific part of the preform in which the thermosetting resin had a high degree of cure, the laminate was placed with the peripheral part being in contact with a standing wall part 6 of the mold shown in Fig. 4(a), then the preheating step was performed, and the preform was taken out of the mold. At this point, as for the peripheral part of the preform as the specific part of the preform and the central part of the preform as the region other than the specific part of the preform, the degree of cure immediately before the pressing step was measured by the above-mentioned method.

Then, the placement and preheating step was performed in the same manner using the other one of the laminates of prepregs, and then the preform was heated in the same mold for 10 minutes while being pressurized at 5 MPa so that the pressing step and the curing step might be performed to obtain a molded product. The evaluated degree of cure, filling properties of the molded product, surface appearance of the molded product, and flash of the molded product are shown in Table 1.

(Example 2)

The prepreg (B) was cut into pieces each having dimensions of 100 mm long and 80 mm wide so that the angle formed by the length direction of the prepreg and the direction of principal axis of the reinforcing fiber might be 0°, ±45°, and 90°. The cut pieces were stacked so that the stacked structure might be [45/0/-45/90]$_{2s}$ to produce a laminate (2-1) of prepregs. Two laminates were produced. Further, the prepreg (A) was cut into pieces each having dimensions of 100 mm long and 10 mm wide. The cut pieces were stacked so that the stacked structure might be [45/0/- 45/90]$_{2s}$ to produce a laminate (2-2) of prepregs. Four laminates were produced. As for each one of the obtained laminates (2-1) and (2-2) of prepregs, the dimensions and the degree of cure were measured by the methods described above.

Then, the inside of the preform that serves as the main part of the product was defined as the specific part of the preform in which the thermosetting resin had a high degree of cure, and the laminate (2-1) was placed in the central part of the mold shown in Fig. 4(a). After a while, each laminate (2-2) was placed on the side of the laminate (2-1), that is, a total of two laminates (2-2) were placed, and the preheating step was performed. As for the central part of the preform as the specific part of the preform and the peripheral part of the preform as the region other than the specific part of the preform, the degree of cure immediately before the pressing step was measured by the above-mentioned method.

Then, the placement and preheating step was performed in the same manner using the remaining laminates of prepregs, and then the pressing step and the curing step were performed in the same manner as in Example 1 to obtain a molded product. The evaluated degree of cure, filling properties of the molded product, and surface appearance of the molded product are shown in Table 1.

(Example 3)

The prepreg (B) was cut into pieces each having dimensions of 95 mm long and 110 mm wide so that the angle formed by the length direction of the prepreg and the direction of principal axis of the reinforcing fiber might be 0°, ±45°, and 90°. The cut pieces were stacked so that the stacked structure might be [45/0/-45/90]$_{2s}$ to produce a laminate (3) of prepregs, that is, a preform. Two laminates were produced. As for one of the obtained laminates (3) of prepregs, the dimensions and the degree of cure were measured by the methods described above.

Then, the periphery of two sides on the short side (the side having a length of 95 mm) of the outer circumference of the preform was defined as the specific part of the preform in which the thermosetting resin had a high degree of cure, the laminate was placed with being curved so that the two sides on the short side might come into contact with the standing wall part of the mold as shown in Fig. 1(b), and then the preheating step was performed. As for the two sides of outer circumference of the preform as the specific part of the preform and the central part of the preform as the region other than the specific part of the preform, the degree of cure immediately before the pressing step was measured by the above-mentioned method.

Then, the placement and preheating step was performed in the same manner using the other laminate of prepregs, and then the pressing step and the curing step were performed in the same manner as in Example 1 to obtain a molded product. The evaluated degree of cure, filling properties of the molded product, surface appearance of the molded product, and flash of the molded product are shown in Table 1.

(Example 4)

The prepreg (B) was cut into pieces each having dimensions of 100 mm long and 80 mm wide so that the angle formed by the length direction of the prepreg and the direction of principal axis of the reinforcing fiber might be 0°, $\pm45$°, and 90°. The cut pieces were stacked so that the stacked structure might be $[45/0/-45/90]_{2s}$ to produce a laminate (4-1) of prepregs. Two laminates were produced. Further, the prepreg (C) was cut into pieces each having dimensions of 100 mm long and 10 mm wide. The cut pieces were stacked so that the stacked structure might be $[45/0/- 45/90]_{2s}$ to produce a laminate (4-2) of prepregs. Four laminates were produced. As for each one of the obtained laminates (4-1) and (4-2) of prepregs, the dimensions and the degree of cure were measured by the methods described above.

Then, the periphery of two sides on the long side of the laminate (4-2) of the outer circumference of the preform (that is, in a 100-mm square preform formed by arranging the laminates (4-1) and (4-2) side by side, the side of the laminate (4-2) corresponding to the outer circumference of the square preform) was defined as the specific part of the preform in which the thermosetting resin had a high degree of cure. The laminate (4-1) was placed in the central part of the mold at the same time as the laminates (4-2) were placed on each side of the laminate (4-1), respectively, and the preheating step was performed. As for the two sides of outer circumference of the preform as the specific part of the preform and the central part of the preform as the region other than the specific part of the preform, the degree of cure immediately before the pressing step was measured by the above-mentioned method.

Then, the placement and preheating step was performed in the same manner using the remaining laminates of prepregs, and then the pressing step and the curing step were performed in the same manner as in Example 1 to obtain a molded product. The evaluated degree of cure, filling properties of the molded product, surface appearance of the molded product, and flash of the molded product are shown in Table 1.

(Example 5)

The prepreg (B) was cut into pieces each having dimensions of 100 mm long and 80 mm wide so that the angle formed by the length direction of the prepreg and the direction of principal axis of the reinforcing fiber might be 0°, $\pm45$°, and 90°. The cut pieces were stacked so that the stacked structure might be $[45/0/-45/90]_{2s}$ to produce a laminate (5-1) of prepregs. Two laminates were produced. Further, the prepreg (C) was cut into pieces each having dimensions of 100 mm long and 10 mm wide. The cut pieces were stacked so that the stacked structure might be $[45/0/- 45/90]_{2s}$ to produce a laminate (5-2) of prepregs. Four laminates were produced. As for each one of the obtained laminates (5-1) and (5-2) of prepregs, the dimensions and the degree of cure were measured by the methods described above.

Then, the periphery of two sides on the long side of the laminate (5-2) of the outer circumference of the preform (that is, in a 100-mm square preform formed by arranging the laminates (5-1) and (5-2) side by side, the side of the laminate (5-2) corresponding to the outer circumference of the square preform) was defined as the specific part of the preform in which the thermosetting resin had a high degree of cure. The laminate (5-1) was placed in the central part of the mold at the same time as the laminates (5-2) were placed on each side of the laminate (5-1), respectively, and then the mold was immediately clamped. After a lapse of time corresponding to the time required for the mold to come into contact with the preform, the laminates (5-1) and (5-2) were taken out of the mold. As for the two sides of outer circumference of the preform as the specific part of the preform and the central part of the preform as the region other than the specific part of the preform, the degree of cure immediately before the pressing step was measured by the above-mentioned method.

Then, the remaining laminates of prepregs were placed in the same manner, and then the pressing step was immediately performed in the same manner as in Example 1. Further, the curing step was performed to obtain a molded product. The evaluated degree of cure, filling properties of the molded product, surface appearance of the molded product, and flash of the molded product are shown in Table 1.

(Example 6)

The prepreg (B) was cut into pieces each having dimensions of 102 mm long and 102 mm wide so that the angle formed by the length direction of the prepreg and the direction of principal axis of the reinforcing fiber might be 0°, $\pm45$°, and 90°. The cut pieces were stacked so that the stacked structure might be $[45/0/-45/90]_{2s}$ to produce a laminate (6) of prepregs, that is, a preform. Two laminates were produced. As for one of the obtained laminates (6) of prepregs, the dimensions and the degree of cure were measured by the methods described above.

Then, the entire peripheral part that is the outer circumference of the preform was defined as the specific part of the preform in which the thermosetting resin had a high degree of cure. In the mold shown in Fig. 4(a), the set temperature of the electric heater (not shown) near the standing wall part 6 was increased to increase the average surface temperature of the standing wall part 6 to a temperature higher by 10°C than the average temperature of the other region.

Subsequently, the laminate was placed with the peripheral part being in contact with the standing wall part 6 of the mold shown in Fig. 4(a), then the preheating step was performed, and the preform was taken out of the mold. After that, as for the peripheral part of the preform as the specific part of the preform and the central part of the preform as the region other than the specific part of the preform, the degree of cure immediately before the pressing step was measured by the above-mentioned method.

Then, the placement and preheating step was performed in the same manner using the other one of the laminates of prepregs, and then the preform was heated in the same mold for 10 minutes while being pressurized at 5 MPa so that the pressing step and the curing step might be performed to obtain a molded product. The evaluated degree of cure, filling properties of the molded product, surface appearance of the molded product, and flash of the molded product are shown in Table 1.

(Comparative Example 1)

The prepreg (A) was cut into pieces each having dimensions of 90 mm long and 90 mm wide so that the angle formed by the length direction of the prepreg and the direction of principal axis of the reinforcing fiber might be 0°, $\pm 45°$, and 90°. The cut pieces were stacked so that the stacked structure might be $[45/0/-45/90/0/90]_{2s}$ to produce a laminate (Comparative-1) of prepregs. Two laminates were produced. As for one of the obtained laminates (Comparative-1) of prepregs, the dimensions and the degree of cure were measured by the methods described above.

Then, the laminate was placed in the central part of the mold, and then the preheating step was performed. After that, as for the peripheral part of the preform and the central part of the preform, the degree of cure immediately before the pressing step was measured by the above-mentioned method.

Then, the placement and preheating step was performed in the same manner using the other laminate of prepregs, and then the pressing step and the curing step were performed by the same method as in Example 1 to obtain a molded product. The evaluated degree of cure, filling properties of the molded product, surface appearance of the molded product, and flash of the molded product are shown in Table 1.

(Comparative Example 2)

The prepreg (B) was cut into pieces each having dimensions of 90 mm long and 90 mm wide so that the angle formed by the length direction of the prepreg and the direction of principal axis of the reinforcing fiber might be 0°, $\pm 45°$, and 90°. The cut pieces were stacked so that the stacked structure might be $[45/0/-45/90/0/90]_{2s}$ to produce a laminate (Comparative-2) of prepregs. Two laminates were produced. As for one of the obtained laminates (Comparative-1) of prepregs, the dimensions and the degree of cure were measured by the methods described above.

Then, the laminate was placed in the central part of the mold, and then the preheating step was performed. After that, as for the peripheral part of the preform and the central part of the preform, the degree of cure immediately before the pressing step was measured by the above-mentioned method.

Then, the placement and preheating step was performed in the same manner using the other laminate of prepregs, and then the pressing step and the curing step were performed by the same method as in Example 1 to obtain a molded product. The evaluated degree of cure, filling properties of the molded product, surface appearance of the molded product, and flash of the molded product are shown in Table 1.

Table 1

| | Example 1 | Example 2 | Example 3 | Example 4 | Example 5 | Example 6 | Comparative Example 1 | Comparative Example 2 |
|---|---|---|---|---|---|---|---|---|
| Prepreg used | A | A, B | B | B, C | B, C | B | A | B |
| Specific part | Entire peripheral part | Inside of preform | Two sides of outer circumference | Two sides of outer circumference | Two sides of outer circumference | Entire peripheral part | - | - |
| Degree of cure $\alpha e$ (%) of specific part before preheating step | 2 | 2 | 2 | 30 | 30 | 2 | 2 | 2 |
| Degree of cure $\alpha i$ (%) of region other than specific part before preheating step | 2 | 2 | 2 | 2 | 2 | 2 | | |
| Degree of cure $\alpha e$ (%) of specific part immediately before pressing step | 30 | 35 | 40 | 40 | 30 | 35 | 40 | 5 |
| Degree of cure $\alpha i$ (%) of region other than specific part immediately before pressing step | 2 | 25 | 5 | 18 | 2 | 2 | | |
| Filling properties of molded product | B | A | A | A | B | A | C | B |
| Surface appearance of molded product | A | A | A | A | A | A | A | C |
| Flash of molded product (in peripheral part or two sides of outer circumference) | A | C | A | A | A | A | C | C |

EP 3 778 172 A1

As shown in Table 1, in Examples 1 to 6, the degree of cure $\alpha e$ of the thermosetting resin in the specific part of the preform was made higher than the degree of cure $\alpha i$ of the thermosetting resin in the region other than the specific part of the preform. As a result, the preform flowed well in the region other than the specific part while the flow of the preform in the specific part was suppressed. As a result, a molded product having no missing part even to the end was obtained, and the obtained molded product was excellent in surface appearance and good in mechanical properties with almost no voids or resin rich area. Meanwhile, in Comparative Example 1, no specific part was provided, and the preform was molded with the entire surface of the laminate having a uniform degree of cure of the thermosetting resin. As a result, large flash was observed in the outer circumference of the molded product, and moreover, the flow was obstructed causing a large resin rich area, and the fibers were disorganized so that the molded product had a poor surface appearance. Further, in Comparative Example 2, although no resin rich area was observed, the fibers were disorganized in the outer circumference of the molded product.

INDUSTRIAL APPLICABILITY

The present invention is particularly suitable for obtaining, by press molding, a three-dimensional shape having a thickness variation such as a thick part or a projection in a wide range of fields such as sports and leisure applications including fishing rods and golf shafts as well as industrial applications such as automobiles and aircraft.

DESCRIPTION OF REFERENCE SIGNS

1: Prepreg
2: Preform
3: First mold (upper mold)
4: Second mold (lower mold)
5: Cavity
6: Protrusion (standing wall)
7: Molded product
8: Specific part
9: Region other than specific part
10: Closed perimeter region inside shape, which is to be subjected to drilling and trimming in post-processing
11: Length direction

**Claims**

1. A method for producing a fiber-reinforced resin by press-molding a prepreg preform containing a reinforcing fiber and a thermosetting resin, the method comprising:

   (a) a preform production step of producing a preform;
   (b) a placement and preheating step of placing the preform in a mold and preheating the preform;
   (c) a pressing step of changing the preform into a product shape; and
   (d) a curing step of curing the preform while pressurizing the preform,

   at start of the pressing step (c), a degree of cure $\alpha e$ of the thermosetting resin in a specific part of the preform being higher than a degree of cure $\alpha i$ of the thermosetting resin in a region other than the specific part of the preform.

2. A method for producing a fiber-reinforced resin by press-molding a prepreg preform containing a reinforcing fiber and a thermosetting resin, the method comprising:

   (a) a preform production step of producing a preform;
   (b) a placement and preheating step of placing the preform in a mold and preheating the preform;
   (c) a pressing step of changing the preform into a product shape; and
   (d) a curing step of curing the preform while pressurizing the preform,

   immediately before the pressing step (c), a degree of cure $\alpha e$ of the thermosetting resin in a specific part of the preform is set higher than a degree of cure $\alpha i$ of the thermosetting resin in a region other than the specific part of the preform.

3. The method according to claim 1 or 2, wherein in the preform production step (a), the specific part of the preform includes a prepreg having a higher degree of cure of the thermosetting resin than the region other than the specific part of the preform does.

4. The method according to any one of claims 1 to 3, wherein in the placement and preheating step (b), the specific part of the preform is preheated at a temperature higher than for the region other than the specific part of the preform.

5. The method according to any one of claims 1 to 4, wherein the mold has a protrusion at a position corresponding to the specific part of the preform, and the specific part of the preform is brought into contact with the protrusion in the placement and preheating step (b).

6. The method according to claim 5, wherein the protrusion has a standing wall shape.

7. The method according to any one of claims 1 to 6, wherein the specific part is a peripheral part of the preform.

8. The method according to any one of claims 1 to 7, wherein the preform being used has an area in a planar state equal to or more than a projected area of a cavity of the mold.

Fig.1

Fig. 2

(a)

(b)

(c)

(d)

EP 3 778 172 A1

Fig. 3

Fig. 4

(a)

3

4

5

6

(b)

3mm

11

20mm

100mm

100mm

2.5mm

Fig. 5

(a)

(b)

(c)

(d)

# EP 3 778 172 A1

## INTERNATIONAL SEARCH REPORT

| | International application No. |
|---|---|
| | PCT/JP2019/009714 |

### A. CLASSIFICATION OF SUBJECT MATTER

Int.Cl. B29C43/58(2006.01)i, B29C43/52(2006.01)i, B29C70/16(2006.01)i, B29C70/42(2006.01)i, B29K101/10(2006.01)n, B29K105/08(2006.01)n

According to International Patent Classification (IPC) or to both national classification and IPC

### B. FIELDS SEARCHED

Minimum documentation searched (classification system followed by classification symbols)
Int.Cl. B29C43/58, B29C43/52, B29C70/16, B29C70/42

| Documentation searched other than minimum documentation to the extent that such documents are included in the fields searched | |
|---|---|
| Published examined utility model applications of Japan | 1922–1996 |
| Published unexamined utility model applications of Japan | 1971–2019 |
| Registered utility model specifications of Japan | 1996–2019 |
| Published registered utility model applications of Japan | 1994–2019 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | WO 2008/093757 A1 (KYOCERA CORP.) 07 August 2008, paragraphs [0041]-[0061], fig. 11A-12B & US 2010/0062249 A1, paragraphs [0075]-[0094], fig. 11A-12B | 1-3 |
| X | JP 2014-108612 A (EHIME UNIVERSITY) 12 June 2014, paragraphs [0019]-[0032], fig. 1-4 (Family: none) | 1-2, 4, 7-8 |

☒ Further documents are listed in the continuation of Box C.     ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 30 May 2019 (30.05.2019) | 11 June 2019 (11.06.2019) |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

**INTERNATIONAL SEARCH REPORT**

International application No.

PCT/JP2019/009714

C (Continuation). DOCUMENTS CONSIDERED TO BE RELEVANT

| Category* | Citation of document, with indication, where appropriate, of the relevant passages | Relevant to claim No. |
|---|---|---|
| A | JP 10-138269 A (HITACHI CHEMICAL INDUSTRY CO., LTD.) 26 May 1998, paragraphs [0007]-[0009], [0018]-[0019] (Family: none) | 1-8 |
| A | JP 2008-73875 A (TORAY INDUSTRIES, INC.) 03 April 2008, paragraphs [0034]-[0037], fig. 1-2 (Family: none) | 1-8 |
| A | JP 2005-335200 A (MATSUSHITA ELECTRIC WORKS, LTD.) 08 December 2005, paragraphs [0017], [0024]-[0029], [0038]-[0041], [0044], fig. 1-5 (Family: none) | 1-8 |

Form PCT/ISA/210 (continuation of second sheet) (January 2015)

**REFERENCES CITED IN THE DESCRIPTION**

**Patent documents cited in the description**

- JP 2015143343 A
- JP 2008068532 A
- JP 2017073460 A